# EUROPÄISCHE PATENTSCHRIFT

(11) **EP 0 802 095 B1**
(45) Veröffentlichungstag und Bekanntmachung des Hinweises auf die Patenterteilung: **07.04.2004**
(21) Anmeldenummer: 97106592.5
(22) Anmeldetag: 21.04.1997
(51) Int. Cl.: B60R 22/20, B60R 22/22

(54) **Sicherheitsgurtsystem**
Safety belt system
Système de ceinture de sécurité

(30) Priorität: 19.04.1996 DE 19615655
(43) Veröffentlichungstag der Anmeldung: 22.10.1997
(73) Patentinhaber: TAKATA-PETRI (Ulm) GmbH, 89081 Ulm (DE)
(72) Erfinder: Pleyer, Matthias, 89250 Senden (DE); Botsch, Axel, 89518 Heidenheim (DE); Schmid, Wolfgang, 89171 Illerkirchberg (DE)
(74) Vertreter: Maikowski, Michael, Dipl.-Ing. Dr.

(56) Entgegenhaltungen:
- DE-A- 2 802 617
- DE-A- 2 826 634
- DE-A- 3 514 769
- DE-A- 3 539 051
- DE-A- 3 743 012
- GB-A- 2 242 608

## Beschreibung

Die Erfindung betrifft ein Sicherheitsgurtsystem mit den Merkmalen gemäß dem Oberbegriff des Anspruchs 1.

Insbesondere bei zweitürigen Personenkraftwagen ist der Sicherheitsgurt in bezug auf den zugehörigen Fahrzeugsitz relativ weit hinten am Kraftfahrzeug angeschlagen. Das Ergreifen des Sicherheitsgutes zum Anlegen desselben ist entsprechend umständlich, da eine starke Körperdrehung erforderlich ist. Dieses Problem wird verschärft, je weiter der zugeordnete Sitz nach vorne vorgeschoben ist.

Es sind daher bereits Vorrichtungen bekannt, die den nicht angelegten Sicherheitsgurt erfassen und in eine bequemere Greifposition zu dem Fahrzeugsitz bewegen. Diese bekannten Vorrichtungen arbeiten mit einem elektromotorisch angetriebenen Greifarm, welcher bei Benutzung des Fahrzeugsitzes automatisch in Aktion tritt. Diese Lösung ist verhältnismäßig aufwendig und daher kostenintensiv und störanfällig.

Aus der DE-PS 35 14 769 C2 ist ein Sicherheitsgurtsystem mit einem unteren Befestigungsbeschlag für den Sicherheitsgurt bekannt, weicher in Fahrzeuglängsrichtung verschiebbar am Fahrzeug befestigt ist. Die Verschiebung erfolgt dabei manuell durch den Benutzer des Fahrzeugsitzes nach dem Anlegen des Sicherheitsgurtes und hat den Zweck, die Anordnung des unteren Befestigungsbeschlages relativ zum Fahrzeug in Abhängigkeit von der Sitzstellung und dem Körperbau des Sitzbenutzers einzustellen. Ein erleichtertes Ergreifen des Sicherheitsgurtes ist mit dieser Anordnung weder bezweckt noch ausreichend sichergestellt, da die Verschiebung des unteren Befestigungsbeschlages erst nach dem Anlegen des Sicherheitsgurtes erfolgt. Der untere Befestigungsbeschlag befindet sich daher vor dem Anlegen in einer Position, die durch den vorherigen Benutzer des Fahrzeugsitzes bestimmt wurde und folglich an die gegenwärtige Benutzung nicht angepasst ist.

In der deutschen Offenlegungsschrift DE 35 39 051 A1 ist einer gattungsgemäße Sicherheitsgurtanordnung beschrieben, bei der das untere rollenferne Ende des Sicherheitsgurtes in Fahrzeuglängsrichtung verschiebbar befestigt ist. Um eine optimale Lage des Sicherheitsgurtes am Körper des Fahrzeuginsassen, insbesondere in dessen Beckenbereich, zu erreichen, weist die Sicherheitsgurtanordnung eine Vorrichtung zur Begrenzung einer in Fahrtrichtung nach vom gerichteten Verstellung des Gurt-Endes auf. Darüber hinaus weist die Sicherheitsgurtanordnung Mittel auf, mit denen das Gurt-Ende in eine den Einstieg in das Fahrzeug nicht behindernde Ablageposition zurückgeführt wird. Diese Mittel sind beispielsweise durch eine an dem Gurt-Ende angreifende Feder gebildet.

Aus der deutschen Offenlegungsschrift 28 02 617 ist ein Gurtschloss bekannt, das längsverstellbar am Fahrzeugboden befestigt ist. Das Gurtschloss steht dabei derart mit dem Fahrzeugsitz in Verbindung, dass das Gurtschloss bei einem Verschieben des Fahrzeugsitzes mitgeführt wird, so dass das Gurtschloss stets die optimale Position relativ zum Fahrzeugsitz aufweist.

Ein Sicherheitsgurtsystem mit den Merkmalen gemäß dem Oberbegriff des Anspruch 1 ist aus der britischen Patentanmeldung GB 22 42 608 bekannt. Bei diesem Sicherheitsgurtsystem ist der untere Befestigungsbeschlag an einer Führungsstange gleitend befestigt. Bei aufrechter Sitzlehne gleitet der untere Befestigungsbeschlag in Richtung nach vom und schlägt an einem Anschlag an, der am Sitz befestigt ist und dessen Position somit von der Sitzstellung abhängt. Bei umgeklappter Sitzlehne gleitet der untere Befestigungsbeschlag in seine dem oberen Befestigungsbeschlag nähere Endsteliung.

Der Erfindung liegt die Aufgabe zugrunde, ein Sicherheitsgurtsystem der eingangs genannten Art so weiterzubilden, dass der Sicherheitsgurt stets in eine bequeme Greifposition gebracht wird, bevor der Sicherheitsgurt angelegt wird. Darüber hinaus soll bei einem Umklappen der Sitzlehne in die hintere Endstellung ― beispielsweise bei einem zweisitzigen Fahrzeug - der Durchstieg auf die hintere Sitzbank freigegeben werden.

Diese Aufgabe wird bei einem Sicherheitsgurtsystem gemäß dem Oberbegriff des Anspruchs 1 erfindungsgemäß durch die kennzeichnenden Merkmale des Anspruchs 1 gelöst.

Durch die Steuerung der Verschiebestellung des unteren Befestigungsbeschlages in Abhängigkeit von der Längsstellung des zugeordneten Fahrzeugsitzes ist gewährleistet, dass sich der untere Befestigungsbeschlag mit dem Fahrzeugsitz bewegt, sich also stets in der gleichen Stellung zum Fahrzeugsitz befindet. Das Ergreifen des Sicherheitsgurtes ist daher in jeder Sitzstellung gleich gut möglich, so dass der Sicherheitsgurt also auch in vorderster Stellung des Fahrzeugsitzes leicht ergriffen werden kann. Durch die Steuerung der Verschiebestellung durch den zugeordneten Fahrzeugsitz selbst ergibt sich der Vorteil, dass der Sicherheitsgurt bereits vor dem Anlegen beim Verstellen des Fahrzeugsitzes in eine bequeme Greifposition mitgenommen wird.

Durch das Verschieben des unteren Befestigungsbeschlages beim Umklappen der Lehne in die hintere Endstellung wird außerdem der Durchstieg auf die hintere Sitzbank - beispielsweise bei einem zweisitzigen Fahrzeug - freigegeben. Das heißt, der Sicherheitsgurt befindet sich bei umgeklappter Sitzlehne im wesentlichen derselben Position wie bei einem herkömmlichen Sicherheitsgurtsystem ohne verschiebbaren unteren Befestigungsbeschlag. Beim Aufrichten der Lehne wird der untere Befestigungsbeschlag dann wieder in seine der Sitzstellung des zugeordneten Fahrzeugsitzes entsprechende Stellung in der Schiene zurückverschoben, so dass der Gurt wieder in einer bequemen Greifhaltung präsentiert wird.

Bei der Erfindung ist der untere Befestigungsbeschlag an einem Gleitstein angebracht, welcher in einer Schiene verschiebbar geführt ist. Hierdurch ist eine sichere Verschiebung des Befestigungsbeschlages und dennoch eine ausreichend feste Verankerung desselben am Fahrzeug gewährleistet.

Zur Verschiebung des unteren Befestigungsbeschlages in seine den Durchstieg freigebende Endstellung ist auf der dem oberen Befestigungs- oder Umlenkbeschlag abgewandten Seite des ersten Gleitsteins ein zweiter Gleitstein vorhanden, welcher in Abhängigkeit von der Klappstellung der Lehne verschiebbar ist. Die automatische Verschiebung des zweiten Gleitsteins ist so vorgesehen, dass sich dieser bei aufgerichteter Lehne in der dem oberen Befestigungs- oder Umlenkbeschlag femen und bei umgeklappter Lehne in seiner diesem nahen Endstellung befindet. Bei aufgerichteter Lehne kann sich daher der erste Gleitstein in seine durch die Sitzstellung des zugeordneten Fahrzeugsitzes festgelegte Position bewegen, während er beim Umklappen der Lehne durch den durch die Lehne nach hinten bewegten zweiten Gleitstein mitgenommen und zusammen mit diesem in die den Durchstieg freigebende Endstellung verschoben wird.

Die Verschiebung des zweiten Gleitsteins kann über einen durch die Lehne betätigbaren Bowdenzug erfolgen. Der Gleitstein ist dabei bevorzugt durch ein Federelement in Richtung auf die dem oberen Befestigungs- oder Umlenkbeschlag feme Endstellung belastet. Durch diese Ausgestaltung ist sichergestellt, dass der den unteren Umlenkbeschlag in seine den Durchstieg freigebende Entstellung verschiebende Bowdenzug stets gespannt ist.

Durch einen an dem unteren Befestigungsbeschlag angelenkten und daher mit diesem beweglichen Vorlegearm, über den der Gurt geführt ist, wird der Gurt in einer noch bequemeren Greifstellung vorgehalten. Hierfür ist der Vorlegearm insbesondere zur Vorderseite des zugehörigen Sitzes hin geneigt angeordnet. Zum Ergreifen des derart stets in der gleichen Vorlageposition zum Fahrzeugsitz gehaltenen Sicherheitsgurts ist daher, wenn überhaupt, nur eine geringe Körperdrehung erforderlich.

Zur zusätzlichen Festlegung des Gleitsteins in der Schiene für den Fall einer Belastung des Sicherheitsgurtes, wie sie insbesondere bei einem Unfall auftritt, ist der Gleitstein an seiner Oberseite mit einer Rastnase versehen, welche zum Eingriff in entsprechende, an der Schiene vorgesehene Rastaufnahmen ausgebildet ist. Hierdurch wird eine sichere und besonders stabile Blockierung des unteren Befestigungsbeschlages im Falle eines Unfalls bewirkt. Um eine problemlose Verschiebung des Gleitsteins in der Schiene bei unbelastetem Gurt sicherzustellen, kann darüber hinaus zwischen Gleitstein und Schiene ein Federelement vorgesehen sein, welches den Gleitstein in seine ausgerastete Stellung belastet.

Die Verschiebung des Gleitsteins in der Schiene kann beispielsweise über einen am Fahrzeugsitz vorhandenen Mitnehmer oder über einen durch den Fahrzeugsitz gesteuerten Bowdenzug erfolgen. In beiden Fällen kann der Gleitstein durch ein Federelement in Richtung auf seine eine Endstellung belastet sein. Bei Verwendung eines Bowdenzuges ist dadurch eine stete Spannung des Zugseiles gewährleistet. Bei Verwendung eines Mitnehmers kann dieser so angeordnet sein, dass er im Gleitstein nur in der der Federkraft entgegengesetzten Richtung angreift, so dass eine Verschiebung des Gleitsteins entgegen der Federkraft vom Mitnehmer nicht blockiert wird.

Ein Ausführungsbeispiel der Erfindung ist in der Zeichnung dargestellt und wird nachfolgend beschrieben. Es zeigen jeweils in schematischer Darstellung:
- Fig.1: eine perspektivische Seitenansicht der Anordnung des unteren Befestigungsbeschlages,
- Fig. 2: eine Explosionsdarstellung des Gegenstandes von Fig. 1,
- Fig. 3: eine teilweise geschnittene Seitenansicht eines Abschnitts der Schiene von Fig. 1 mit unbelastetem Gleitstein in vergrößerter Darstellung, und
- Fig. 4: den Gegenstand von Fig. 3 mit belastetem Gleitstein in gleicher Darstellung.

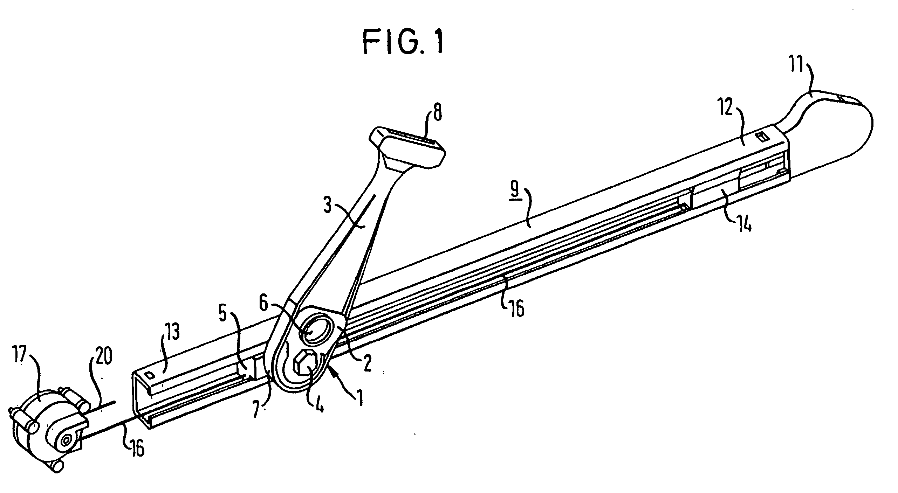

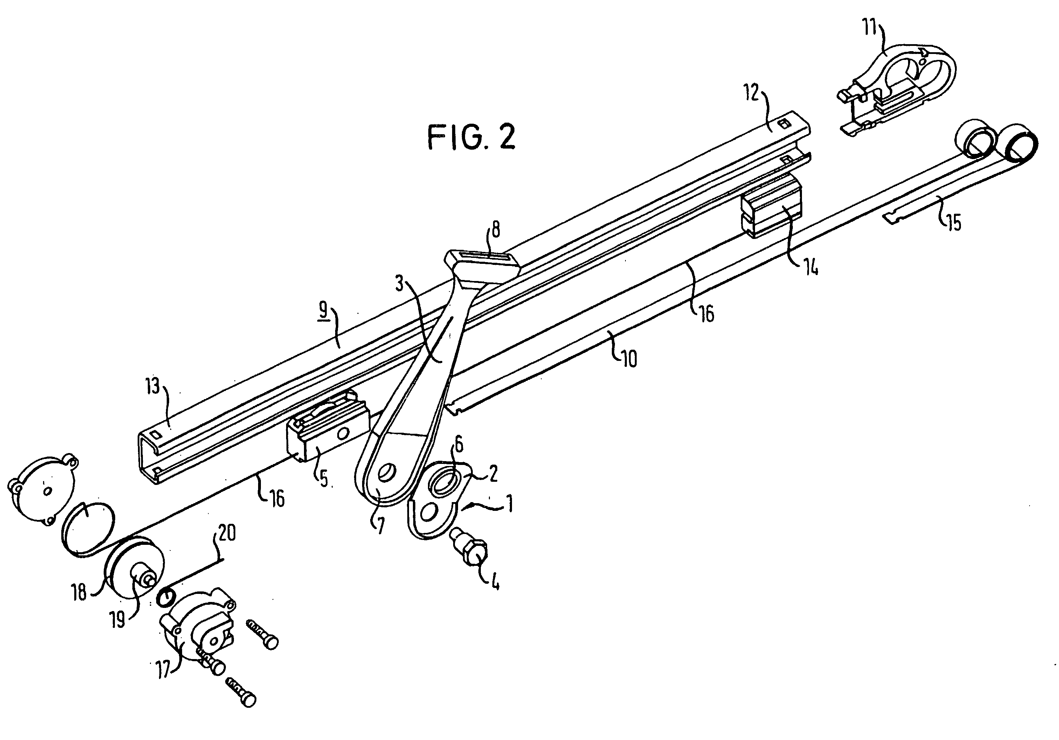

Die Fig. 1 und 2 zeigen die Anordnung des unteren Befestigungsbeschlages 1 eines erfindungsgemäßen Sicherheitsgurtsystems ohne Darstellung des Sicherheitsgurtes selbst. Der untere Befestigungsbeschlag 1 umfaßt eine Ankerplatte 2, welche zusammen mit einem Vorlegearm 3 mittels eines Bolzens 4 an einem ersten Gleitstein 5 befestigt ist. Die Ankerplatte 2 weist eine Aufnahme 6 für das rollenferne Ende eines Sicherheitsgurtes auf und ist in das festgelegte Ende 7 des Vorlegearms 3 eingepaßt. Der Vorlegearm 3 weist eine Durchführung 8 für den Sicherheitsgurt auf und ist zusammen mit der Ankerplatte 2 gegenüber dem Gleitstein 5 derart geneigt angeordnet, daß der durch die Durchführung 8 geführte Sicherheitsgurt zur Vorderseite des zugehörigen Fahrzeugsitzes hin präsentiert wird.

Der Gleitstein 5 ist in einer im Querschnitt c-förmigen Schiene 9 zwischen zwei Endstellungen verschiebbar geführt, welche seitlich zum zugehörigen Fahrzeugsitz in Verschieberichtung desselben am Fahrzeug angebracht ist. Bei einem üblichen Personenwagen ist die Schiene 9 beispielsweise an der Innenseite des entsprechenden Schwellers befestigt. An dem Gleitstein 5 greift eine Spiralbandfeder 10 an, welche mit ihrem anderen Ende in einem an dem vorderen Ende 12 der Schiene 9 vorhandenen Gehäuse 11 verankert ist und von diesem aufgenommen wird. Der Kraft der den Gleitstein 5 in Richtung auf das vordere Ende 12 der Schiene 9 belastenden Feder 10 wirkt ein hier nicht dargestellter, an dem zugehörigen Fahrzeugsitz angebrachter Mitnehmer entgegen, der an dem Gleitstein 5 vorderseitig angreift. Bei vorderster Stellung des Fahrzeugsitzes erlaubt dieser Mitnehmer eine Verschiebung des Gleitsteins 5 bis in seine vordere Endstellung, während er den Gleitstein 5 in der hintersten Sitzstellung in seine hintere Endstellung am hinteren Ende 13 der Schiene 9 mitnimmt.

In der Schiene 9 ist ein zweiter verschiebbar geführter Gleitstein 14 vorgesehen, welcher in der Schiene 9 weiter vorne angeordnet ist als der erste Gleitstein 5. Der zweite Gleitstein 14 ist durch eine zweite Spiralbandfeder 15 ebenfalls in Richtung auf das vordere Ende 12 der Schiene belastet, welche mit ihrem anderen Ende wiederum in dem Gehäuse 11 verankert ist und von diesem aufgenommen wird. In entgegengesetzter Richtung greift an dem zweiten Gleitstein 14 ein Bowdenzug 16 an, welcher über die hier nicht dargestellte Lehne des zugehörigen Fahrzeugsitzes betätigt wird. Um den unterschiedlichen Weglängen der Fahrzeuglehne und des zweiten Gleitsteins 14 Rechnung zu tragen, ist eine Übersetzungseinrichtung 17 mit zwei kraftschlüssig miteinander verbundenen Rollen 18 und 19 unterschiedlichen Durchmessers vorgesehen, auf die einerseits der Bowdenzug 16 und andererseits ein zweiter Bowdenzug 20 aufwickelbar ist, der mit seinem anderen Ende an der Lehne des zugeordneten Fährzeugsitzes festgelegt ist.

Anstelle des am Fahrzeugsitz angeordneten Mitnehmers kann zur Verschiebung des ersten Gleitsteins 5 auch ein weiterer Bowdenzug vorgesehen sein, welcher an dem ersten Gleitstein 5 entgegen der Kraft der ersten Spiralbandfeder 10 angreift, wobei auch hier eine Übersetzungseinrichtung vorgesehen sein kann.

In beiden Fällen wird der erste Gleitstein 5 zusammen mit dem unteren Befestigungsbeschlag 2 und dem Vorlegearm 3 für den Sicherheitsgurt durch den zugehörigen Fahrzeugsitz in Abhängigkeit von dessen Sitzstellung in der Schiene 9 verschoben, so daß der Sicherheitsgurt relativ zum Fahrzeugsitz stets in der gleichen bequemen Greifhaltung präsentiert wird. Beim Zurückfahren des Fahrzeugsitzes wirkt dabei entweder der Mitnehmer oder der vom Fahrzeugsitz gesteuerte Bowdenzug entgegen der Kraft der Spiralbandfeder 10 auf den Gleitstein 5 und verschiebt diesen zum hinteren Ende 13 der Schiene 9 hin. Entsprechend bewegt sich der Gleitstein 5 beim Nachvorneverfahren des zugehörigen Fahrzeugsitzes so weit in Richtung auf das vordere Ende 12 der Schiene 9, wie es der Mitnehmer oder der Bowdenzug zulassen. Bei vorderster Sitzstellung befindet sich auch der Gleitstein 5 in seiner vordersten Stellung.

Der zweite Gleitstein 14 befindet sich bei aufrechter Sitzlehne des zugehörigen Fahrzeugsitzes in seiner vordersten Position am vorderen Ende 12 der Schiene 9. Durch Umklappen der Lehne wird der Bowdenzug 16 über die Übersetzungseinrichtung 17 vom Bowdenzug 20 betätigt, der seinerseits von der Lehne betätigt wird. Der zweite Gleitstein 14 wird dadurch entgegen der Kraft der Spiralbandfeder 15 in Richtung auf das hintere Ende 13 der Schiene 9 bewegt, bis er auf den ersten Gleitstein 5 trifft. Beim Weiterumklappen der Lehne nimmt der zweite Gleitstein 14 den ersten Gleitstein 5 mit und bewegt sich zusammen mit diesem in die gemeinsame hintere Endstellung am hinteren Ende 13 der Schiene 9. Der durch die Durchführung 8 des Vorlegearms 3 geführte Sicherheitsgurt wird dadurch aus dem Durchstiegsbereich der zugehörigen Fahrzeugtüre herausbewegt, so daß ein Einsteigen auf eine hintere Sitzbänk erleichtert ist. Der Sicherheitsgurt befindet sich bei umgeklappter Lehne dadurch praktisch in derselben Position wie bei einem herkömmlichen Sicherheitsgurtsystem ohne verschiebbaren unteren Befestigungsbeschlag 2.

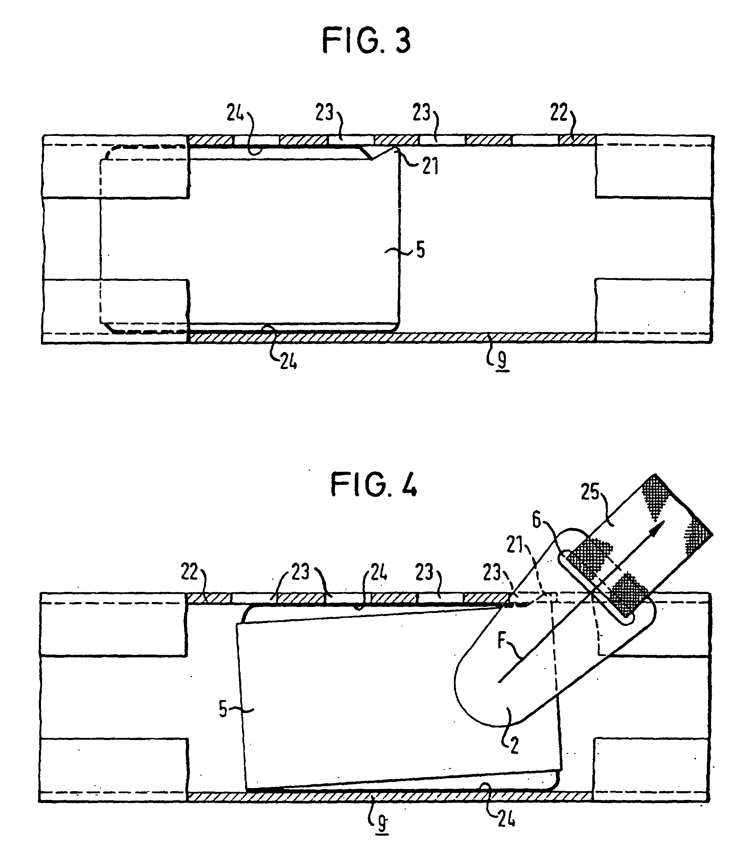

Die Fig. 3 und 4 zeigen in vergrößerter Darstellung einen Abschnitt der erfindungsgemäßen Schiene 9 und des in dieser angeordneten ersten Gleitsteins 5. Hierbei handelt es sich um eine Variante der in den Fig. 1 und 2 dargestellten Ausgestaltung, bei welcher der Gleitstein 5 mit einer nach oben weisenden Einrastnase 21 versehen ist. Die im Querschnitt C-förmige Schiene 9 weist in ihrem oberen Schenkel 22 entsprechende Rastausnehmungen 23 auf, in welche die Nase 21 des ersten Gleitsteins 5 einrastbar ist. Die eingerastete Stellung ist in Fig. 4 dargestellt.

Um den ersten Gleitstein 5 in der in Fig. 3 dargestellten ausgerasteten Stellung zu halten, solange der untere Befestigungsbeschlag 2 nicht durch den Sicherheitsgurt 25 belastet ist, wie es insbesondere bei einem Unfall der Fall ist, sind zwischen der Schiene 9 und dem Gleitstein 5 zwei Blattfedern 24 vorhanden, die jeweils mit einem Ende an dem Gleitstein 5 angelenkt und mit dem anderen Ende zwischen Schiene 9 und Gleitstein 5 eingespannt sind. Der Gleitstein 5 wird dadurch beim normalen Betrieb sicher in seiner ausgerasteten Stellung gehalten.

Bei einem Unfall wird auf den unteren Umlenkbeschlag 2 vom Sicherheitsgurt 25 eine Kraft F übertragen, die stets eine nach oben gerichtete Komponente aufweist. Durch diese Kraft F wird der Gleitstein 5 entgegen der Kraft der Federn 24 in der Schiene 9 verdreht, so daß die Einrastnase 21 in eine der Rastausnehmungen 23 der Schiene 9 einrastet. Der Gleitstein 5 ist dadurch bei Belastung des unteren Umlenkbeschlages 2 gegen eine Verschiebung in der Schiene 9 sicher blockiert, so daß der untere Umlenkbeschlag 2 in der entsprechenden Stellung ebenfalls festgelegt ist.

Insgesamt erhält man so ein einfaches und zuverlässiges Sicherheitsgurtsystem, welches durch automatisches Verschieben des unteren Befestigungsbeschlages für das rollenfernen Ende des Sicherheitsgurtes gewährleistet, daß der Sicherheitsgurt in jeder Sitzstellung in der gleichen bequemen Greifposition vorgehalten wird. Insbesondere bei einem Dreipunktgurt mit einem oberen Befestigungs- oder Umlenkbeschlag wird dadurch der Gurt seitlich zu einer sitzenden Person in einer bequem ergreifbaren Position aufgespannt. Dabei bewirkt die automatische Rückstellung des Gurtes beim Vorklappen der Sitzlehne zusätzlich, daß die Durchstiegsöffnung auf eine hintere Sitzbank stets automatisch vom Sicherheitsgurt freigehalten wird, und zwar unabhängig von der jeweiligen Sitzstellung des zugehörigen Fahrzeugsitzes. Der automatisch verstellbare untere Befestigungsbeschlag kann aber auch bei einem Zweipunktgurt verwendet werden.

## Patentansprüche

1. Sicherheitsgurtsystem für in Fahrzeuglängsrichtung verschiebbare Sitze eines Fahrzeugs mit einem von einer Rolle abwickelbaren Gurt (25), mit einem oberen Umlenk- oder Befestigungsbeschlag für den Gurt (25) und mit einem seitlich zum zugeordneten Sitz angeordneten unteren Befestigungsbeschlag (2) für das rollenfeme Ende des Gurtes (25), wobei der zugehörige Fahrzeugsitz eine zur Sitzfläche umklappbare Lehne aufweist und wobei der untere Befestigungsbeschlag (2) in Fahrzeuglängsrichtung derart verschiebbar am Fahrzeug befestigt ist,
- dass seine Verschiebestellung über den zugeordneten Fahrzeugsitz in Abhängigkeit von dessen Längsstellung gesteuert ist und
- dass er beim Umklappen der Lehne des Sitzes automatisch in seine dem oberen Befestigungs- oder Umlenkbeschlag nähere Endstellung verschoben wird, und wobei
- der untere Befestigungsbeschlag (2) an einem Gleitstein (5) angebracht ist, welcher in einer Schiene (9) verschiebbar geführt ist,
**dadurch gekennzeichnet, dass**
- auf der dem oberen Befestigungs- oder Umlenkbeschlag abgewandten Seite des ersten Gleitsteins (5) in der Schiene (9) ein zweiter Gleitstein (14) vorhanden ist, welcher in Abhängigkeit von der Klappstellung der Lehne verschiebbar ist, wobei sich der zweite Gleitstein (14) bei aufgerichteter Lehne in der dem oberen Befestigungs- oder Umlenkbeschlag femen, und bei umgeklappter Lehne in der nahen Endstellung befindet.

2. Sicherheitsgurtsystem nach Anspruch 1, **dadurch gekennzeichnet, dass** zur Verschiebung des zweiten Gleitsteins (14) ein über die Lehne betätigbarer Bowdenzug (16) vorgesehen ist.

3. Sicherheitsgurtsystem nach Anspruch 1 oder 2, **dadurch gekennzeichnet, dass** der zweite Gleitstein (14) durch ein Federelement (15) in Richtung auf die dem oberen Befestigungs- oder Umlenkbeschlag feme Endstellung belastet ist.

4. Sicherheitsgurtsystem nach einem der vorangehenden Ansprüche, **dadurch gekennzeichnet, dass** an dem unteren Befestigungsbeschlag (2) ein mit diesem verschiebbarer Vorlegearm (3) angelenkt ist, über welchen der Gurt (25) geführt ist und der insbesondere in Richtung auf die Vorderseite des zugeordneten Sitzes geneigt angeordnet ist.

5. Sicherheitsgurtsystem nach Anspruch 4, **dadurch gekennzeichnet, dass** der Gleitstein (5) auf seiner Oberseite mit einer Rastnase (21) versehen ist, welche zum Eingriff in entsprechende, an der Schiene (9) vorgesehene Rastaufnahmen (23) ausgebildet ist.

6. Sicherheitsgurtsystem nach Anspruch 5, **dadurch gekennzeichnet, dass** zwischen Gleitstein (5) und Schiene (9) ein Federelement (24) vorhanden ist, weiches den Gleitstein (5) in Richtung auf seine ausgerastete Stellung belastet.

7. Sicherheitsgurtsystem nach einem der Ansprüche 4 bis 6, **dadurch gekennzeichnet, dass** der Gleitstein (5) über einen am Fahrzeugsitz vorhandenen Mitnehmer verschiebbar ist.

8. Sicherheitsgurtsystem nach einem der Ansprüche 4 bis 6, **dadurch gekennzeichnet, dass** der Gleitstein (5) über einen durch den Fahrzeugsitz gesteuerten Bowdenzug verschiebbar ist.

9. Sicherheitsgurtsystem nach Anspruch 7 oder 8, **dadurch gekennzeichnet, dass** der Gleitstein (5) durch ein Federelement (10) in Richtung auf seine eine Endstellung belastet ist.

## Claims

1. Seat belt system for vehicle seats which can be displaced in the longitudinal direction of the vehicle, having a belt (25) which can be unwound from a roller, having an upper deflecting or fastening fitting for the belt (25) and having a lower fastening fitting (2) which is arranged at the side of the associated seat and is intended for that end of the belt (25) which is remote from the roller, the associated vehicle seat having a backrest which can be folded over towards the seat surface and the lower fastening fitting (2) being fastened to the vehicle in a manner allowing it to be displaced in the longitudinal direction of the vehicle in such a manner
- that its displacement position is controlled via the associated vehicle seat as a function of the longitudinal position thereof, and
- that, when the backrest of the seat is folded over, the said fitting is automatically displaced into its end position which is closer to the upper fastening or deflecting fitting, and
- the lower fastening fitting (2) is attached to a sliding block (5) which is guided displaceably in a rail (9),
**characterized in that**
- there is a second sliding block (14) in the rail (9) on that side of the first sliding block (5) which faces away from the upper fastening or deflecting fitting, the said second sliding block being displaceable as a function of the folding position of the backrest, the second sliding block (14) being situated, when the backrest is set upright, in the end position which is remote from the upper fastening or deflecting fitting, and being situated in the near end position to them when the backrest is folded over.

2. Seat belt system according to Claim 1, **characterized in that** a Bowden cable (16) which can be actuated via the backrest is provided for displacing the second sliding block (14).

3. Seat belt system according to Claim 1. or 2, **characterized in that** the second sliding block (14) is loaded by a spring element (15) in the direction of the end position which is remote from the upper fastening or deflecting fitting.

4. Seat belt system according to one of the preceding claims, **characterized in that** the lower fastening fitting (2) has articulated on it a forward-leaning arm (3) which can be displaced with the latter, via which the belt (25) is guided and which is arranged such that it is inclined, in particular, in the direction of the front side of the associated seat.

5. Seat belt system according to Claim 4, **characterized in that** the sliding block (5) is provided on its upper side with a latching lug (21) which is designed for engagement in corresponding latching sockets (23) provided on the rail (9).

6. Seat belt system according to Claim 5, **characterized in that** there is a spring element (24) between the sliding block (5) and rail (9), the said spring element loading the sliding block (5) in the direction of its unlatched position.

7. Seat belt system according to one of Claims 4 to 6, **characterized in that** the sliding block (5) can be displaced via a driver provided on the vehicle seat.

8. Seat belt system according to one of Claims 4 to 6, **characterized in that** the sliding block (5) can be displaced via a Bowden cable controlled by the vehicle seat.

9. Seat belt system according to Claim 7 or 8, **characterized in that** the sliding block (5) is loaded in the direction of its one end position by a spring element (10).

## Revendications

1. Système de ceinture de sécurité pour les sièges d'un véhicule automobile, mobiles en direction longitudinale du véhicule, comportant une ceinture (25) déroulable à partir d'un rouleau, une ferrure supérieure de renvoi ou de fixation pour la ceinture (25) et une ferrure inférieure de fixation (2) agencée latéralement à côté du siège associé et destinée à l'extrémité de ceinture (25) éloignée du rouleau, le siège associé du véhicule comprenant un dossier rabattable vers la surface d'assise et la ferrure inférieure de fixation (2) étant fixée sur le véhicule avec mobilité en direction longitudinale du véhicule, de telle sorte que
- sa position de déplacement est commandée via le siège associé du véhicule en fonction de sa position longitudinale, et
- lors du rabattement du dossier du siège, elle est déplacée automatiquement jusque dans sa position finale plus proche de la ferrure supérieure de fixation ou de renvoi,
- et la ferrure inférieure de fixation (2) est agencée sur un coulisseau (5) qui est guidé en déplacement dans un rail (9),
**caractérisé en ce que**
sur le côté du premier coulisseau (5), détourné de la ferrure supérieure de fixation ou de renvoi, un deuxième coulisseau (14) est prévu dans le rail (9), qui est mobile en fonction de la position de rabattement du dossier, le deuxième coulisseau (14) étant situé dans la position finale éloignée de la ferrure supérieure de fixation ou de renvoi lorsque le dossier est redressé, et étant situé dans la position finale proche de ladite ferrure lorsque le dossier est rabattu.

2. Système de ceinture de sécurité selon la revendication 1, **caractérisé en ce que** pour déplacer le deuxième coulisseau (14), il est prévu une commande Bowden (16) actionnable via le dossier.

3. Système de ceinture de sécurité selon l'une ou l'autre des revendications précédentes, **caractérisé en ce que** le deuxième coulisseau (14) est chargé par un élément élastique (15) en direction de la position finale éloignée de la ferrure supérieure de fixation ou de renvoi.

4. Système de ceinture de sécurité selon l'une des revendications précédentes, **caractérisé en ce qu'**il est prévu sur la ferrure inférieure de fixation (2) un avant-bras (3) articulé sur celle-ci et mobile avec celle-ci, via lequel la ceinture (25) est guidée et qui est agencé en particulier incliné en direction du côté avant du siège associé.

5. Système de ceinture de sécurité selon la revendication 4, **caractérisé en ce que** sur sa face supérieure, le coulisseau (5) est pourvu d'un bec d'enclenchement (21) qui est réalisé pour s'engager dans des logements d'enclenchement (23) correspondants prévus sur le rail (9).

6. Système de ceinture de sécurité selon la revendication 5, **caractérisé en ce qu'**il est prévu entre le coulisseau (5) et le rail (9) un élément élastique (24) qui charge le coulisseau (5) en direction de sa position désenclenchée.

7. Système de ceinture de sécurité selon l'une des revendications 4 à 6, **caractérisé en ce que** le coulisseau (5) est mobile par un entraîneur prévu sur le siège du véhicule.

8. Système de ceinture de sécurité selon l'une des revendications 4 à 6, **caractérisé en ce que** le coulisseau (5) est mobile par une commande Bowden commandée par le siège du véhicule.

9. Système de ceinture de sécurité selon l'une ou l'autre des revendications 7 et 8, **caractérisé en ce que** le coulisseau (5) est chargé en direction de sa position finale par un élément élastique (10).
